# FASCICULE DE BREVET EUROPEEN

(11) **EP 2 569 216 B1**
(45) Date de publication et mention de la délivrance du brevet: **12.03.2014**
(21) Numéro de dépôt: 11725161.1
(22) Date de dépôt: 12.05.2011
(51) Int. Cl.: B64D 11/06

(54) **TABLETTE DE SIÈGE À TRAJECTOIRE CONTRÔLÉE ET OPTIMISÉE ET MEUBLE DE SIÈGE ASSOCIÉ**
SITZBASIS MIT KONTROLLIERTEM UND OPTIMIERTEM WEG UND ZUGHEÖRIGER SITZ
SEAT BASE HAVING A CONTROLLED AND OPTIMISED PATH AND ASSOCIATED SEAT

(30) Priorité: 14.09.2010 EP 10305984; 12.05.2010 FR 1053725
(43) Date de publication de la demande: 20.03.2013
(73) Titulaire: Zodiac Seats France, 36100 Issoudun (FR)
(72) Inventeur: LIGONNIERE, Laurent, F-36100 Issoudun (FR); ERHMANN, Charles, F-36100 Issoudun (FR)
(74) Mandataire: Marconnet, Sébastien
(86) Numéro de dépôt international: PCT/FR2011/051066
(87) Numéro de publication internationale: WO 2011/141680

(56) Documents cités:
- WO-A1-2008/141829
- DE-U1- 20 020 072
- US-A- 1 324 503
- US-A- 1 634 929
- US-A- 6 059 357
- US-A1- 2005 012 375

## Description

### DOMAINE TECHNIQUE DE L'INVENTION

L'invention concerne une tablette de siège à trajectoire contrôlée et optimisée, ainsi que le meuble de siège associé.

L'invention trouve une application particulièrement avantageuse dans le domaine des tablettes pour siège d'aéronef.

### ETAT DE LA TECHNIQUE

Les sièges passagers d'avions commerciaux sont, pour la plupart, équipés de tablette permettant de prendre des repas, de travailler, d'écrire ou simplement de poser de menus objets.

Ces tablettes ne sont utilisables qu'en vol, et doivent être rangées en phases de décollage ou d'atterrissage, voire dans des conditions de vol difficiles.

Les déploiements des tablettes de siège d'avions sont très variés et dépendent de leur position de rangement. Certains sont simples comme sur la majorité des sièges économiques, d'autres sont plus complexes du fait de l'encombrement réduit des espaces de rangement et de leur accès, et peuvent présenter un fonctionnement difficile à maîtriser pour le passager non initié (voir les documents WO2008141829 et US2005012375).

La grande majorité des tablettes se composent généralement d'un plateau en une ou deux parties, et d'au moins un bras de maintien. Les positions de rangement sont très diverses, verticale, horizontale, en applique, dans des logements fermés par des portes ou des couvercles.

Outre leur difficulté d'utilisation, ces systèmes de tablette connus peuvent interférer avec le corps du passage et/ou avec la structure du siège placé devant le meuble comportant la tablette.

### OBJET DE L'INVENTION

L'invention a pour but de remédier à ces inconvénients.

A cet effet, l'invention concerne une tablette de siège caractérisée en ce qu'elle comporte :
- un plateau apte à se déplacer suivant une trajectoire horizontale entre une position déployée dans laquelle le plateau se trouve en majorité à l'extérieur d'un meuble de siège et une position rangée dans laquelle le plateau se trouve en majorité à l'intérieur du meuble de siège,
- un bras de maintien de longueur variable présentant une première extrémité reliée au meuble par l'intermédiaire d'une première liaison pivot à axe vertical et une deuxième extrémité reliée au plateau par l'intermédiaire d'une deuxième liaison pivot à axe vertical, et
- un dispositif de guidage contrôlant la trajectoire du plateau suivant une trajectoire unique lors de son déplacement entre la position déployée et la position rangée et réciproquement.

Selon un premier mode de réalisation, le bras de maintien comporte deux éléments formés chacun par deux bielles articulées entre elles à une de leurs extrémités par une liaison pivot à axe vertical, ces deux éléments étant reliés entre eux par leurs extrémités par l'intermédiaire de liaisons pivot à axe vertical, deux liaisons pivot du bras étant confondues avec les liaisons pivot entre les extrémités du bras et respectivement le meuble et le plateau.

Le dispositif de guidage est alors formé par deux galets fixés au plateau et deux rails concentriques solidaires du meuble.

De préférence, le bras est équipé de deux ressorts de rappel ayant pour fonction d'assister le déplacement du plateau.

Selon un deuxième mode de réalisation, le bras de maintien comporte:
- une première partie liée en rotation à une plaque appartenant au meuble par l'intermédiaire de la première liaison pivot, cette première partie comportant au moins une barre longitudinale, et
- une deuxième partie liée en rotation au plateau par l'intermédiaire de la deuxième liaison pivot, cette deuxième partie étant munie d'une ouverture destinée à recevoir les barres, de sorte que la deuxième partie peut se déplacer en translation le long de la barre.

Le dispositif de guidage est alors formé par une pièce de liaison ayant une première extrémité liée à la plaque par l'intermédiaire d'une première liaison pivot à axe vertical, cette extrémité étant apte à se déplacer le long d'une rainure ménagée dans la plaque et une deuxième extrémité liée à la plaque par l'intermédiaire d'une deuxième liaison pivot à axe vertical, et au moins un galet fixé au plateau et un rail solidaire du meuble.

De préférence, la pièce de liaison comporte en outre un dispositif de retenue pour éviter le pivotement du plateau dans un plan vertical.

Selon une réalisation, le dispositif de retenue comporte au moins un plot de retenue présentant une collerette s'étendant dans le plan du plateau, ce plot de retenue étant en appui contre un rebord d'une rainure en forme d'arc de cercle ménagée dans le plateau.

Selon une réalisation, le plateau étant creux, le bras est logé à l'intérieur du creux du plateau.

Selon une réalisation, la tablette comporte en outre un dispositif de verrouillage assurant un blocage des mouvements relatifs du bras de maintien par rapport au plateau lorsque le plateau se trouve en position rangée.

L'invention concerne en outre un meuble de siège pour avion caractérisé en ce qu'il comporte une tablette selon l'invention.

### BREVE DESCRIPTION DES FIGURES

L'invention sera mieux comprise à la lecture de la description qui suit et à l'examen des figures qui l'accompagnent. Ces figures ne sont données qu'à titre illustratif mais nullement limitatif de l'invention. Elles montrent :
Figures 1a et 1b : des vues en perspective d'un siège comportant un meuble muni d'une tablette selon l'invention respectivement dans une position rangée et dans une position déployée ;
Figures 2a-2c : des vues de dessus d'une tablette selon un premier mode de réalisation de l'invention lors des différentes étapes permettant de la faire passer d'une position déployée à une position rangée ;
Figure 3 : une vue en détails de la liaison entre la tablette des Figures 2a-2c et le meuble du siège ;
Figures 4a et 4b : des vues du bras de maintien de la tablette des Figures 2a-2c dans deux positions différentes ;
Figure 5 : une vue en perspective de la tablette des Figures 2a-2c munie d'un levier articulé appartenant à un dispositif de verrouillage ;
Figures 6a et 6b : des vues de dessous de la tablette des Figures 2a-2c respectivement lorsque le dispositif de verrouillage est dans une position verrouillée et dans une position déverrouillée ;
Figures 7a et 7b: des vues respectivement de dessous et de dessus d'une tablette réalisée selon un deuxième mode de réalisation de l'invention dans une position déployée ;
Figure 8: une vue en perspective de la tablette des Figures 7a-7b dans une position déployée ;
Figure 9: une vue de dessus d'un siège comportant un meuble muni d'une tablette des Figures 7a-7b dans lequel les éléments du dispositif de guidage sont visibles par transparence.
Les éléments identiques, similaires, ou analogues conservent les mêmes références d'une figure à l'autre.

### DESCRIPTION D'EXEMPLES DE REALISATION DE L'INVENTION

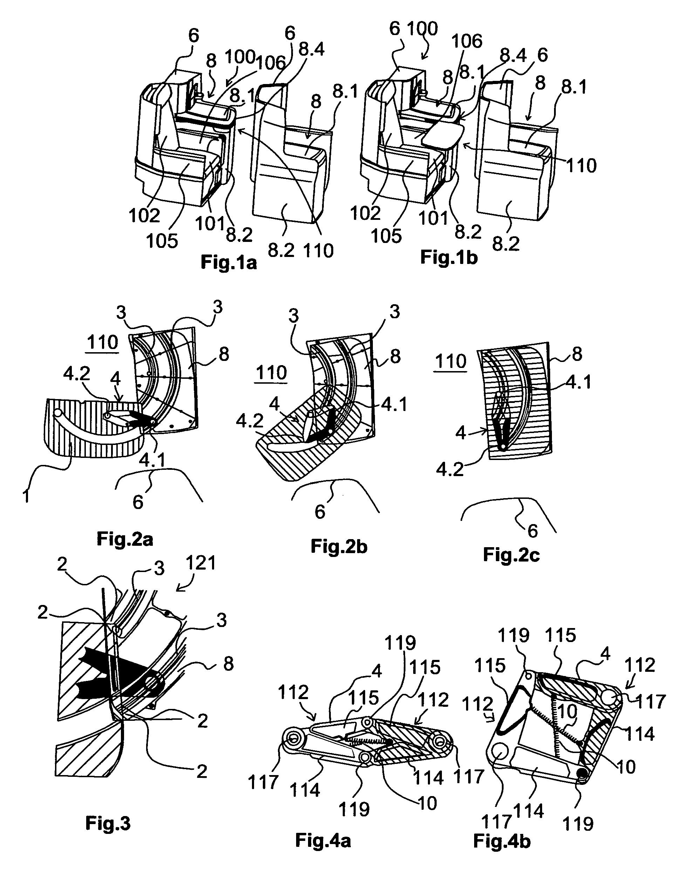

Les Figures 1 à 6 montrent un premier mode de réalisation de la tablette selon l'invention.

Plus précisément, les Figures 1a et 1b montrent un siège 100 comportant une assise 101 et un dossier 102 articulé par rapport à l'assise 101. Le dossier 102 peut passer d'une position inclinée dans laquelle le passager est en position allongée à une position relevée dans laquelle le passager est en position assise. La position relevée dite position TTL (Taxi, Take off and Landing) est la position prise par le passager lorsque l'aéronef est en phase de décollage, d'atterrissage ou de stationnement. Deux accoudoirs 105 et 106 sont positionnés de part et d'autre de l'assise 101.

Par ailleurs, un meuble 8 est installé sur un côté du siège 100. Ce meuble 8 comporte dans sa partie supérieure 8.1 un support plan sur lequel le passager peut poser des objets et dans sa partie inférieure 8.2 une cavité (non visible sur les Figures) comportant un repose-pieds pour recevoir les pieds du passager situé derrière le siège 100. Le meuble de siège 8 comporte en outre une ouverture 8.4 s'étendant horizontalement pour recevoir le plateau 1 lorsque le plateau 1 se trouve en position rangée. Cette ouverture 8.4 est située en dessous de la partie supérieure 8.1 du meuble 8 latéral du siège et au dessus du repose-pied du passager.

Le siège 100 comporte également une coque 6 privative entourant la partie arrière du dossier 102 et du meuble 8 pour isoler le passager de l'environnement extérieur. Les termes «avant» et «arrière» sont donnés par référence à un passager assis sur le siège 100, les éléments « avant » étant positionnés face au passager; tandis que les éléments « arrière » sont positionnés derrière le passager.

Une tablette référencée 110 comporte un plateau 1, apte à se déplacer entre une position déployée (cf Figure 2a) dans laquelle le plateau 1 se situe en majorité à l'extérieur du meuble 8 et une position rangée (cf Figure 2c) dans laquelle le plateau 1 se situe en majorité à l'intérieur du meuble 8. Pour passer d'une position à l'autre, le plateau 1 se déplace suivant une trajectoire plane horizontale. Les termes « horizontal » et « vertical » sont donnés par référence à un aéronef au sol, une direction « horizontale » étant sensiblement parallèle au plancher de l'aéronef; tandis qu'une direction verticale est sensiblement perpendiculaire au plancher de l'aéronef. Le plan horizontal suivant lequel la tablette se déplace englobe aussi un plan formant un angle de quelques degrés avec le plancher pour compenser l'assiette de l'avion en vol.

Un bras 4 de maintien de longueur variable présente une première extrémité 4.1 reliée au meuble 8 par l'intermédiaire d'une première liaison pivot à axe vertical et une deuxième extrémité 4.2 reliée au plateau 1 par l'intermédiaire d'une deuxième liaison pivot à axe vertical. On rappelle qu'une liaison pivot entre deux éléments permet à ces deux éléments de se déplacer en rotation l'un par rapport à l'autre suivant un axe de rotation.

Comme montré sur les Figures 4a et 4b, le bras 4 de maintien présente en l'occurrence une forme de pantographe. A cet effet, le bras 4 comporte deux éléments 112 formés chacun par deux bielles 114 et 115 articulées entre elles à une de leurs extrémités par une liaison pivot 117 à axe vertical. Les éléments 112 présentent ainsi chacun une forme en V. En outre, ces deux éléments 112 sont reliés entre eux par leurs extrémités par l'intermédiaire de liaisons pivot 119 à axe vertical. Le bras 4 présente ainsi la forme d'un losange articulé au niveau des intersections entre ses côtés. Une telle configuration du bras 4 permet de faire varier la distance entre les extrémités du bras 4 correspondant aux liaisons 117. On note également que les liaisons 117 du bras 4 sont confondues avec les liaisons pivot entre les extrémités 4.1, 4.2 du bras 4 et respectivement le meuble 8 et le plateau 1.

De préférence, le bras 4 est équipé de deux ressorts de rappel 10 permettant d'assister la sortie ou la rentrée de la tablette 110 à l'intérieur du meuble 8. A cet effet, chaque ressort 10 a ses extrémités reliées à deux côtés opposés des bielles 114, 115 formant les côtés du losange.

Par ailleurs, un dispositif de guidage 121 permet de contrôler la trajectoire du plateau 1 lors de son déplacement entre la position déployée et la position rangée. Par « contrôler la trajectoire », on entend le fait que le dispositif de guidage 121 permet de s'assurer que la tablette 1 passe d'une position déployée à une position rangée et réciproquement suivant une trajectoire unique. A cet effet, le dispositif de guidage 121 contrôle notamment la longueur du bras 4 en fonction de la position du plateau 1.

Ce dispositif 121 de guidage est formé par au moins un galet 2 lié au plateau 1 et au moins un rail 3 de forme courbée fixé au meuble 8, le galet 2 se déplaçant le long du rail 3. En l'occurrence, ce dispositif 121 comporte quatre galets 2 et deux rails 3 concentriques, de sorte que deux galets 2 coopèrent avec chacun des rails 3.

Les mouvements combinés du bras 4 et du dispositif 121 de guidage permettent d'éviter toute interférence de la tablette 110 avec la coque 6 du siège 6 avant, tout en maximisant l'espace de vie du passager lors du déploiement.

Le plateau 1 est de préférence creux, ce qui permet de positionner l'ensemble des mécanismes, en particulier le bras 4, à l'intérieur du creux du plateau 1, évitant tout risque de pincement des doigts du passager.

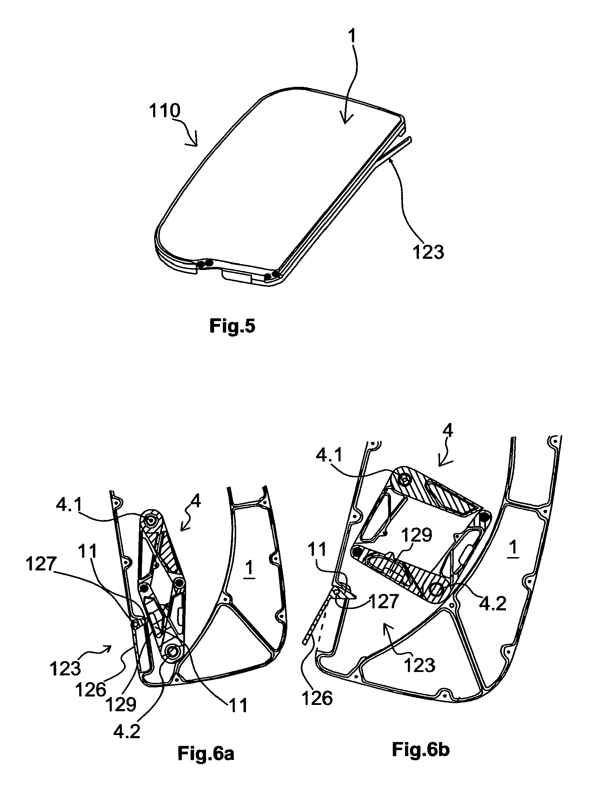

De préférence, la tablette 110 est verrouillée en position rangée au moyen d'un dispositif 123 de blocage montré sur les Figures 5 et 6. Ce dispositif 123 permet d'interdire tout mouvement relatif entre le plateau 1 et le bras 4 (mais pas entre la tablette 1 et le meuble de siège 8). Plus précisément, ce dispositif 123 de blocage comporte un levier 126 lié au plateau 1 par l'intermédiaire d'une liaison pivot 127 à axe vertical. Ce levier 126 est positionné le long d'un côté longitudinal du plateau 1 à l'intérieur d'un évidement du plateau 1. Ce levier 126 comporte à une de ses extrémités un loquet 11. Par ailleurs, une cavité 129 est ménagée dans une des bielles 114, 115 du bras 4.

En position verrouillée, le loquet 11 est positionné à l'intérieur de la cavité 129 de manière à bloquer le déplacement de la tablette 110. En revanche, en position déverrouillée, le loquet 11 est dégagé de la cavité 129, de sorte que la tablette 110 peut être déplacée librement d'une position à l'autre par le passager. Le déploiement et le rangement de la tablette 110 pourront être réalisés facilement par le passager au moyen du levier 126 en effectuant un mouvement naturel de traction ou de poussée. De préférence, la liaison pivot 127 comporte un ressort de rappel ayant tendance à ramener le levier 126 contre le bord du plateau 1 lorsque le levier 126 n'est pas actionné par le passager.

Le dispositif 123 de blocage est interne au plateau 1 de la tablette 110, ce qui permet d'éviter d'avoir recours à des équipements supplémentaires à installer sur le meuble 8 de siège.

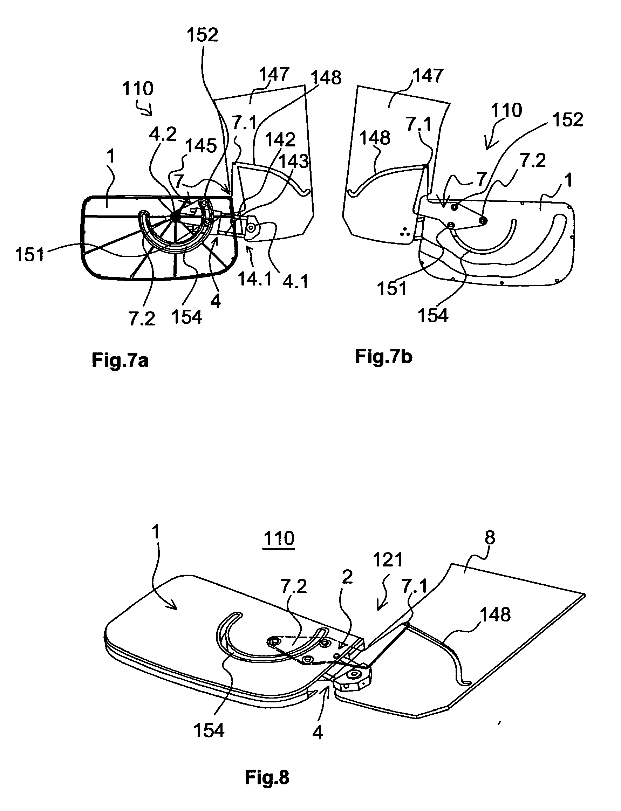

Les Figures 7 à 9 montrent un deuxième mode de réalisation de la tablette 110 selon l'invention.

Dans ce mode de réalisation, le bras 4 de maintien à longueur variable présente une première extrémité 4.1 liée à une plaque 147 appartenant au meuble 8 par l'intermédiaire d'une première liaison pivot à axe vertical et une deuxième extrémité 4.2 liée au plateau 1 par l'intermédiaire d'une deuxième liaison pivot à axe vertical (cf Figures 7a-7b).

Plus précisément, le bras de maintien 4 comporte une première partie 141 liée en rotation à la plaque 147 par l'intermédiaire de la première liaison pivot. Cette première partie 141 comporte deux barres longitudinales 142 et 143 parallèles entre elles. Le bras de maintien 4 comporte également une deuxième partie 145 liée en rotation au plateau 1 par l'intermédiaire de la deuxième liaison pivot. Cette deuxième partie 145 est munie de deux ouvertures destinées à recevoir les barres 142 et 143, de sorte que la deuxième partie 145 peut se déplacer en translation le long des barres 142 et 143. Cela permet de faire varier la distance entre la première 141 et la deuxième 145 parties et donc la longueur du bras 4. En variante, le bras 4 comporte une seule ou une pluralité de barres 142, 143.

Le dispositif de guidage 121 comporte une pièce de liaison 7 articulée installée entre le meuble 8 et le plateau 1. La pièce de liaison 7 comporte une première extrémité 7.1 liée à une plaque 147 par l'intermédiaire d'une première liaison pivot à axe vertical. Cette extrémité 7.1 est également apte à se déplacer à l'intérieur d'une rainure 148 traversante qui s'étend entre deux côtés longitudinaux de la plaque 147. La pièce de liaison 7 comporte une deuxième extrémité 7.2 liée au plateau 1 par l'intermédiaire d'une deuxième liaison pivot à axe vertical.

De préférence, la pièce de liaison 7 comporte un dispositif de retenue pour éviter le pivotement du plateau 1 dans un plan vertical. Le dispositif de retenue comporte en l'occurrence deux plots de retenue 151, 152 présentant chacun une collerette s'étendant dans le plan du plateau 1, ce plot 151, 152 de retenue étant en appui contre un rebord d'une rainure 154 en forme d'arc de cercle ménagée dans le plateau 1. Les plots 151, 152 peuvent se déplacer le long de la rainure 154. Les plots 151, 152 pénètrent à l'intérieur du plateau 1 par la face inférieure du plateau 1, les collerettes étant situées dans la partie supérieure des plots 151, 152. Les collerettes et les rebords de la rainure 154 s'étendent dans le plan du plateau 1, une face inférieure de la collerette étant en appui contre une face supérieure du rebord de la rainure.

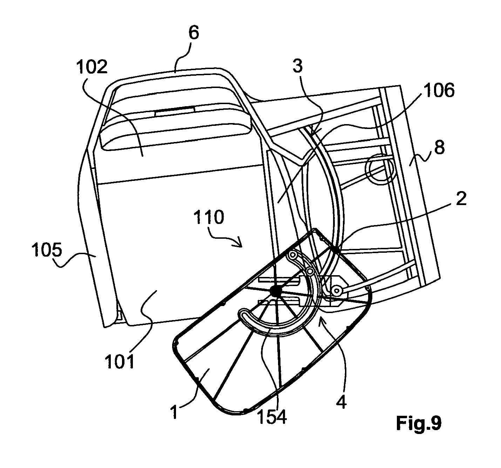

Comme montré sur les Figures 8 et 9, le dispositif de guidage 121 comporte également un galet 2 lié au plateau 1 et au moins un rail 3 de forme courbée fixé au meuble 8, le galet 2 se déplaçant le long du rail 3. Le creux de la courbe du rail 3 est positionné du côté du passager.

Le plateau 1 est de préférence creux pour loger le bras 4 et la pièce de liaison 7 à l'intérieur du plateau 1 lorsque le plateau 1 est en position rangée.

Un dispositif 123 de blocage peut bien entendu être adapté au deuxième mode de réalisation des Figures 7 à 9 afin de verrouiller le plateau 1 en position rangée.

## Revendications

1. Meuble de siège avec une tablette (110) comportant:
- un plateau (1) apte à se déplacer suivant une trajectoire horizontale entre une position déployée dans laquelle le plateau se trouve en majorité à l'extérieur d'un meuble de siège (8) et une position rangée dans laquelle le plateau se trouve en majorité à l'intérieur du meuble de siège (8),
- un bras (4) de maintien présentant une première extrémité (4.1) reliée au meuble (8) par l'intermédiaire d'une première liaison pivot à axe vertical et une deuxième extrémité (4.2) reliée au plateau (1) par l'intermédiaire d'une deuxième liaison pivot à axe vertical, et
- un dispositif (121) de guidage contrôlant la trajectoire du plateau (1) suivant une trajectoire unique lors de son déplacement entre la position déployée et la position rangée et réciproquement, **caracterisée en ce que** le bras (4) de maintien est de longueur variable.

2. Meuble de siège selon la revendication 1, **caractérisée en ce que** le bras (4) de maintien comporte deux éléments (112) formés chacun par deux bielles (114, 115) articulées entre elles à une de leurs extrémités par une liaison pivot (117) à axe vertical, ces deux éléments (112) étant reliés entre eux par leurs extrémités par l'intermédiaire de liaisons pivot (119) à axe vertical, deux liaisons pivot (117) du bras (4) étant confondues avec les liaisons pivot entre les extrémités (4.1, 4.2) du bras (4) et respectivement le meuble (8) et le plateau (1).

3. Meuble de siège selon la revendication 2, **caractérisée en ce que** le dispositif (121) de guidage comporte deux galets (2) fixés au plateau et deux rails concentriques (3) solidaires du meuble.

4. Meuble de siège selon la revendication 2 ou 3, **caractérisée en ce que** le bras (4) est équipé de deux ressorts de rappel (10) ayant pour fonction d'assister le déplacement du plateau (1).

5. Meuble de siège selon la revendication 1, **caractérisée en ce que** le bras de maintien (4) comporte:
- une première partie (141) liée en rotation à une plaque (147) appartenant au meuble (8) par l'intermédiaire de la première liaison pivot, cette première partie (141) comportant au moins une barre longitudinale (142, 143), et
- une deuxième partie (145) liée en rotation au plateau (1) par l'intermédiaire de la deuxième liaison pivot, cette deuxième partie (145) étant munie d'une ouverture destinée à recevoir les barres (142, 143), de sorte que la deuxième partie (145) peut se déplacer en translation le long de la barre (142, 143).

6. Meuble de siège selon la revendication 5, **caractérisé en ce que** le dispositif de guidage (121) comporte :
- une pièce de liaison (7) ayant une première extrémité (7.1) liée à la plaque (147) par l'intermédiaire d'une première liaison pivot à axe vertical, cette extrémité (7.1) étant apte à se déplacer le long d'une rainure (148) ménagée dans la plaque (147) et une deuxième extrémité (7.2) liée à la plaque (1) par l'intermédiaire d'une deuxième liaison pivot à axe vertical, et
- au moins un galet (2) fixé au plateau et un rail (3) solidaire du meuble.

7. Meuble de siège selon la revendication 6, **caractérisé en ce que** la pièce de liaison (7) comporte en outre un dispositif de retenue pour éviter le pivotement du plateau (1) dans un plan vertical.

8. Meuble de siège selon la revendication 7, **caractérisé en ce que** le dispositif de retenue comporte au moins un plot de retenue (151, 152) présentant une collerette s'étendant dans le plan du plateau (1), ce plot (151, 152) de retenue étant en appui contre un rebord d'une rainure (154) en forme d'arc de cercle ménagée dans le plateau (1).

9. Meuble de siège selon l'une des revendications 1 à 8, **caractérisée en ce que** le plateau (1) étant creux, le bras (4) est logé à l'intérieur du creux du plateau (1).

10. Meuble de siège selon l'une des revendications 1 à 9, **caractérisée en ce qu'**elle comporte en outre un dispositif (123) de verrouillage assurant un blocage des mouvements relatifs du bras (4) de maintien par rapport au plateau (1) lorsque le plateau (1) se trouve en position rangée.

## Patentansprüche

1. Sitzeinheit mit einem Klapptisch (110), umfassend:
- eine Tischplatte (1), die entlang einen horizontalen Weg zwischen einer ausgezogenen Stellung, in der die Tischplatte hauptsächlich außerhalb einer Sitzeinheit (8) ist, und einer eingezogenen Stellung, in der die Tischplatte hauptsächlich innerhalb der Sitzeinheit (8) ist, verschiebbar ist,
- einen haltungsarm (4), der ein erstes, an die Sitzeinheit (8) durch eine erste Schwenkverbindung mit einer vertikalen Achse angeschlossenes Ende (4.1) und ein zweites, an die Tischplatte (1) durch eine zweite Schwenkverbindung mit einer vertikale Achse angeschlossenes Ende (4.2) aufweist, und
- eine Führungsvorrichtung (121) zum Steuern des Bewegungsverlaufs der Tischplatte (1) entlang einen einzigartigen Weg beim Verschieben von der ausgezogenen Stellung bis zur eingezogenen Stellung und umgekehrt, **dadurch gekennzeichnet, dass** der Haltungsarm (4) eine variable Länge aufweist.

2. Sitzeinheit nach Anspruch 1, **dadurch gekennzeichnet, dass** der Haltungsarm (4) zwei Elemente (122) umfasst, die jeweils von zwei, an einer ihrer Enden durch eine Schwenkverbindung (117) mit einer vertikalen Achse aneinandergelenkten Stangen (114, 115) gebildet werden, wobei diese zwei Elemente (112) an ihren Enden durch die Schwenkverbindungen (119) mit vertikalen Achsen miteinanderverbunden werden, wobei die zwei Schwenkverbindungen (117) des Armes (4) mit den Schwenkverbindungen zwischen den Enden (4.1, 4.2) des Armes (4) und der Sitzeinheit (8) beziehungsweise der Tischplatte (1) übereinstimmen.

3. Sitzeinheit nach Anspruch 2, **dadurch gekennzeichnet, dass** die Führungsvorrichtung (121) zwei an der Tischplatte befestigten Rollen (2) und zwei konzentrischen Schienen aus einem Stück mit der Sitzeinheit umfasst.

4. Sitzeinheit nach Anspruch 2 oder 3, **dadurch gekennzeichnet, dass** der Arm (4) mit zwei Rückstellfedern (10) zur Unterstützung der Verschiebung der Tischplatte (1) versehen ist.

5. Sitzeinheit nach Anspruch 1, **dadurch gekennzeichnet, dass** der Haltungsarm (4) umfasst:
- einen ersten Teil (141), der mit einer zur Sitzeinheit (8) zugehörigen Platte (147) durch die erste Schwenkverbindung rotierend verbunden wird, wobei dieser erste Teil (141) mindestens einen Längsstab (142, 143) umfasst, und
- einen zweiten Teil (145), der mit der Tischplatte (1) durch die zweite Schwenkverbindung rotierend verbunden wird, wobei dieser zweite Teil (145) mit einer Öffnung zum Empfangen der Stäbe (142, 143) versehen ist, so dass der zweite Teil (145) mit einer Translationsbewegung entlang dem Stab (142, 143) verschieben kann.

6. Sitzeinheit nach Anspruch 5, **dadurch gekennzeichnet, dass** die Führungsvorrichtung (121) umfasst:
- ein Verbindungsteil (7) mit einem ersten, mit der Platte (147) durch eine erste Schwenkverbindung mit einer vertikalen Achse verbundenen Ende (7.1), wobei dieses Ende (7.1) entlang eine Nut (148) in der Platte (147) verschiebbar ist, und mit einem zweiten, mit der Tischplatte (1) durch eine zweite Schwenkverbindung mit einer vertikalen Achse verbundenen Ende (7.2), und
- mindestens eine an der Tischplatte befestigte Rolle (2) und eine Schiene (3) aus einem Stück mit der Sitzeinheit.

7. Sitzeinheit nach Anspruch 6, **dadurch gekennzeichnet, dass** das Verbindungsteil (7) außerdem eine Haltevorrichtung umfasst, um zu verhindern, dass die Tischplatte (1) in einer vertikalen Ebene schwenkt.

8. Sitzeinheit nach Anspruch 7, **dadurch gekennzeichnet, dass** die Haltevorrichtung mindestens einen Haltestift (151, 152) mit einem in der Ebene der Tischplatte (1) sich erstreckenden Flansch umfasst, wobei sich der genannte Haltestift (151, 152) an einem Rand einer kreisbogenförmigen Nut (154) in der Tischplatte (1) abstützt.

9. Sitzeinheit nach einem der Ansprüche 1 bis 8, **dadurch gekennzeichnet, dass** die Tischplatte (1) einen Hohlraum aufweist, wobei der Arm (4) im Hohlraum in der Tischplatte (1) gelagert ist.

10. Sitzeinheit nach einem der Ansprüche 1 bis 9, **dadurch gekennzeichnet, dass** sie außerdem eine Verriegelungsvorrichtung (123) zum Blockieren der relativen Bewegungen des Haltungsarmes (4) im Verhältnis zur Tischplatte (1) umfasst, wenn die Tischplatte (1) in der eingezogenen Stellung ist.

## Claims

1. Seat unit having a tray table (110), comprising:
- a tray (1) able to move along a horizontal path between an extended position, in which the tray is mainly outside a seat unit (8), and a stored position, in which the tray is mainly inside the seat unit (8),
- an holding arm (4) having a first end (4.1) connected to the seat unit (8) through a first pivot connection having a vertical axis and a second end (4.2) connected to the tray (1) through a second pivot connection having a vertical axis, and
- a guiding device (121) for controlling the trajectory of the tray (1) along a unique path when moving from the extended position to the stored position and vice versa, **characterized in that** the holding arm (4) has a variable length.

2. Seat unit according claim 1, **characterized in that** the holding arm (4) comprises two elements (112), each of them being formed by two connecting rods (114, 115) hingedly connected to one another at one of their ends through a pivot connection (117) having a vertical axis, these two elements (112) being connected to one another at their ends through pivot connections (119) having vertical axes, the two pivot connections (117) of the arm (4) coinciding with the pivot connections between the ends (4.1, 4.2) of the arm (4) and the seat unit (8) respectively the tray (1).

3. Seat unit according to claim 2, **characterized in that** the guiding device (121) comprises two rollers (2) fixed to the tray and two concentric rails integral with the seat unit.

4. Seat unit according to claim 2 or 3, **characterized in that** the arm (4) is provided with two return springs (10) for assisting the displacement of the tray (1).

5. Seat unit according to claim 1, **characterized in that** the holding arm (4) comprises:
- a first part (141) rotatingly connected to a plate (147) belonging to the seat unit (8) through the first pivot connection, this first part (141) comprising at least one longitudinal bar (142, 143), and
- a second part (145) rotatingly connected to the tray (1) through the second pivot connection, this second part (145) being provided with an opening for receiving the bars (142, 143), so that the second part (145) can move with a translatory movement along the bar (142, 143).

6. Seat unit according to claim 5, **characterized in that** the guiding device (121) comprises:
- a connecting piece (7) having a first end (7.1) connected to the plate (147) through a first pivot connection having a vertical axis, this end (7.1) being able to move along a groove (148) in the plate (147), and a second end (7.2) connected to the tray (1) through a second pivot connection having a vertical axis, and
- at least one roller (2) fixed to the tray and a rail (3) integral with the seat unit.

7. Seat unit according to claim 6, **characterized in that** the connecting piece (7) further comprises a retaining device for preventing the tray (1) from pivoting in a vertical plane.

8. Seat unit according to claim 7, **characterized in that** the retaining device comprises at least one retaining pin (151, 152) having a flange extending in the plane of the tray (1), said retaining pin (151, 152) bearing against an edge of a circular arc-shaped groove (154) in the tray (1).

9. Seat unit according to anyone of the claims 1 to 8, **characterized in that**, as the tray (1) has a hollow space, the arm (4) is seated within the hollow space in the tray (1).

10. Seat unit according to anyone of the claims 1 to 9, **characterized in that** it further comprises a locking device (123) for the relative movements of the holding arm (4) relative to the tray (1) when the tray (1) is in the stored position.
